# EUROPEAN PATENT APPLICATION

(11) **EP 0 543 380 A2**
(43) Date of publication of application: **26.05.1993**
(21) Application number: 92119742.2
(22) Date of filing: 19.11.1992
(51) Int. Cl.: C04B 35/66, F22B 37/10

(54) **Thermally conductive refractory composition and its use**

(30) Priority: 19.11.1991 US 795417
(71) Applicant: NORTON COMPANY, Worcester, MA 01615-0008 (US)
(72) Inventor: Cortellini, Edmund A., North Brookfield, MA 01535 (US)
(74) Representative: Diehl, Hermann O. Th., Dr.

(57) **Abstract**

A hard protective and thermally conductive refractory coating composition initially applied by painting or spraying onto and which bonds to metallic boiler tubes at low temperatures and useable to a maximum temperature of about 1000°C, comprises 70-90% by weight of refractory grain less than 44 microns, 2-10% by weight of clay, 2-15% by weight of a phosphate binder and 1-5% by weight of a flux all mixed with sufficient water to reach the desired consistency for the type of application.

## Description

The invention relates to a thermally conductive refractory composition.

The prior art discloses many types of refractory materials such as fibrous coverings applied to and for insulating metal hot water and steam pipes from heat loss. Metal boiler tubes have also been made of high temperature alloys and coated with various materials to prevent erosion, corrosion, and chemical attack thereof by products of combustion.

A number of self supporting thick refractory shields such as disclosed in U.S. Patents 4,682,568 are also known to be satisfactory. However, they are expensive to produce and assemble as a great number of half sections must interlock with one another when assembled about a section of each tube. However, the prior art methods and coatings have not been entirely satisfactory or economical for use in apparatus such as incinerators in which municipal refuse, trash, and garbage are simultaneously burned to heat and produce superheated steam or other fluids in the tubes for driving turbine driven generators and producing energy therewith.

The instant invention aims to provide a more economical and reliable refractory coating composition and a simple method of application thereof to protect metal boiler and superheater tubes from direct attack from the harmful products of combustion without loss of heat transfer to the tubes. This object is solved by the thermally conductive refractory composition of independent claim 1. Further advantageous features, aspects, and details of the composition are evident from the dependent claims and the description. A preferred application of the composition is evident from claim 12. The claims are intended to be understood as a first non-limiting approach of defining the invention in general terms.

The invention provides a refractory coating especially suitable for boiler tubes.

The invention also provides a thermally conductive refractory coating which is applied by brushing or spraying and which bonds to metal at low temperature to protect incinerator boiler tubes from chemical attack by the high temperatures, corrosive, erosive and abrasive products of combustion during incineration of refuse and generation of energy therefrom.

The invention further provides a refractory coating composition applied by a painting or spraying technique for protecting superheater metal boiler tubes from corrosive, erosive, and abrasive action by the products of combustion during incineration of trash and garbage and the resulting generation of electrical energy therefrom.

According to a specific aspect of the invention a protective hard thermally conductive refractory coating composition is applied by brushing or spraying which bonds to metal boiler and superheater tubes at a relatively much lower temperature than the expected maximum operating temperature of about 1000° C. The refractory coating material is comprised of 70-90% by weight of refractory particles less than 44 µm 2-15% by weight phosphate binder, 2-10% by weight clay, 1-5% by weight of a low temperature flux all mixed with sufficient water to provide the desired consistency for brushing or spraying onto the metal tubes.

### Description of the Preferred Embodiments

The refractory composition for coating and extending the life of superheated boiler tubes by protecting them from erosion, corrosion and chemical attack by the products of combustion may comprise 70 to 90% by weight refractory particles of less than 44 µm in size. The refractory particles maybe of any of the well known refractory or ceramic materials used to withstand high temperature and to line furnace walls and combustion chambers. The refractory particles tested and found to adhere with high hardness to metal superheater tubes include: silicon carbide, silicon nitride, ferrosilicon nitride, titanium silicide, molybdenum disilicide, zirconium boride, titanium boride, boron carbide, nickel-chromium alloy, nickel aluminide, and mixtures thereof. To the refractory mix is added 2 to 10% by weight of clay selected from Ball clay or bentonite and which ceramically bonds the refractory particles together at the higher operating temperature of the boiler or superheater. Of the clays, the non-swelling clays are preferred.

A low temperature water soluble phosphate binder of 2 to 15% by weight is dry bonded together with the clay and refractory particles and may be selected from the group consisting of sodium phosphate, aluminum phosphate, phosphoric acid and mixtures thereof. To improve and provide a satisfactory bond to the external surface of the metal tubes, a low temperature flux or combination of fluxes in the amount of 1-5% by weight of the total weight of the above ingredients are added to the dry mix. The flux may include boric acid, borax, cryolite, potassium fluoroborate or mixtures thereof.

A preferred formulation for a refractory composition suitable for application and low temperature bonding to clean metal tubes made of various carbon steel alloys comprises as follows:
85% by weight of silicon carbide refractory grain having an average particle size of 3 µms, a dry aluminum phosphate binder in the amount of 10% by weight, 5% by weight of a non-swelling ball clay and to the total weight of the above ingredients is added about 2% by weight of a water soluble, boric acid, flux.

The above dry ingredients are mixed and blended together and to the total weight of the batch of dry mix is added and mixed therewith about 22% by weight of water to provide the desired consistency for brushing the composition onto the tubes.

For spraying the refractory composition onto the pipes, a greater amount of water, up to 45% by weight of the total weight of the batch of dry mix, must be added.

A patching paste or mortar can be provided by decreasing the amount of water content to as little as 10% by weight of the total weight of the batch. However, a suitable brushing consistency, depending upon the various ingredients used to prepare the batch of dry mix can be provided by mixing from 17 to 27% by weight of the total weight of the batch with water. Thus, a satisfactory consistency for applying the refractory composition by various well known methods will require mixing more or less water in a range of from 10 to 45% by weight of the total weight of the batch of dry mix.

The preferred composition including water in the amount of 22% by weight of the total weight of the batch can be easily brushed onto the clean exterior surface of the metal tubes and allowed to dry sufficient, to provide a single thin coating. However, several coats of the composition maybe applied to provide a coating of up to 3 mm, (1/8") thick. Generally a thin coating of about 1.5 mm (1/16") thick is sufficient to protect the tubes from attack by the products of combustion.

The refractory coating composition applied to the tubes of the desired thickness is then allowed to dry for approximately 12 hours, depending on temperature and humidity, after which the boiler is fired at a low temperature of about 200°C for two hours whereupon the composition becomes well bonded to the surface of the metal tubes.

Thereafter the superheater is then put into operation whereupon it is heated to a higher temperature whereupon the clay in the composition cements and ceramically bonds the refractory particles together and thus provides a hard and thermally conductive refractory coating on the superheater tubes.

Thus, the life expectancy of the superheater tube is greatly extended by the protection afforded them by the hard refractory coating that can withstand temperatures up to about 1000°C without loss of thermal conduction to the tubes and the erosive, corrosive, and chemical attack by the products of combustion.

## Claims

1. A thermally conductive refractory composition, especially for coating and protecting metallic boiler tubes from attack by the products of combustion comprising:
70 to 90% by weight of thermally conductive refractory particles of less than 44 µm in size,
2 to 10% by weight of clay,
2 to 15% by weight of phosphate binder,
a flux in the amount of 1 to 5% of the total weight of the refractory particles, the clay and phosphate binder, and
water in the amount of up to 45% of the total weight of the refractory particles, the clay, the phosphate binder, and the flux.

2. A thermally conductive refractory composition according to claim 1 wherein the refractory particles are selected from a group consisting of silicon carbide, silicon nitride, ferrosilicon nitride, titanium silicide, molybdenum silicide, zirconium boride, titanium boride, boron carbide, nickel chromium alloy, nickel aluminide, and mixtures thereof.

3. A thermally conductive refractory composition according to claim 1 or 2 wherein the clay is selected from dry ball clay, dry bentonite, and mixtures thereof.

4. A thermally conductive refractory composition according to any one of the preceding claims wherein the clay is a non-swelling dry clay.

5. A thermally conductive refractory composition according to any one of the preceding claims wherein the phosphate binder is soluble in water and selected from a group consisting of sodium phosphate, aluminum phosphate, phosphoric acid, and mixtures thereof.

6. A thermally conductive refractory composition according to any one of the preceding claims wherein the flux is selected from a group consisting of boric acid, borax, cryolite, potassium fluoborate, and mixtures thereof.

7. A thermally conductive refractory composition according to any one of the preceding claims wherein the refractory particles comprise:
85% by weight of silicon carbide particles having an average size of 3 µm.

8. A thermally conductive refractory composition according to claim 7 wherein the clay comprises:
5% by weight of a non-swelling dry ball clay.

9. A thermally conductive refractory composition according to claim 7 or 8 wherein the phosphate binder comprises:
10% by weight of a dry water soluble aluminum phosphate.

10. A thermally conductive refractory composition according to any one of claims 7 to 9 wherein the flux comprises:
a dry water soluble boric acid in the amount of 2% of the total weight of the refractory particles, the dry non-swelling ball clay, and the water soluble dry aluminum phosphate binder.

11. A thermally conductive refractory composition according to any one of claims 7 to 10 wherein the water comprises:
22% of the total weight of the refractory particles, the dry non-swelling ball clay, the dry water soluble aluminum phosphate binder, and the dry water soluble boric acid.

12. A metal boiler tube comprising:
an external surface coated with and protected by the composition of any one of the preceding claims.

13. Use of the thermally conductive refractory composition of any one of the preceding claims for protecting the external surface of a metal boiler tube.
